Europäisches Patentamt

European Patent Office

Office européen des brevets

(19)

(11) Numéro de publication: **0 246 157**
**B1**

(12) **FASCICULE DE BREVET EUROPEEN**

(45) Date de publication du fascicule du brevet: **12.09.90**

(51) Int. Cl.⁵: **F 27 B 1/16, C 03 B 5/12**

(21) Numéro de dépôt: **87401077.0**

(22) Date de dépôt: **13.05.87**

(54) Perfectionnement aux procédés et dispositifs de fusion de matériaux fibrables.

(30) Priorité: **13.05.86 FR 8606821**

(43) Date de publication de la demande:
**19.11.87 Bulletin 87/47**

(45) Mention de la délivrance du brevet:
**12.09.90 Bulletin 90/37**

(84) Etats contractants désignés:
**DE ES FR GB IT SE**

(56) Documents cités:
**DE-A-3 106 859**
**FR-A-2 124 541**
**FR-A-2 572 390**
**US-A-3 294 505**

(73) Titulaire: **ISOVER SAINT-GOBAIN**
**Les Miroirs 18, avenue d'Alsace**
**F-92400 Courbevoie (FR)**

(72) Inventeur: **Besne, Michel**
**23, rue des Fusillés**
**F-76800 Saint-Etienne du Rouvray (FR)**
Inventeur: **Guillot, Fernand**
**6, Square des Hêtres Bonsecours**
**F-76240 Le Mesnil Esnard (FR)**

(74) Mandataire: **Leconte, Jean-Gérard et al**
**Saint-Gobain Recherche 39, Quai Lucien Lefranc**
**F-93304 Aubervilliers Cedex (FR)**

# Description

L'invention concerne la fusion de matériaux étirables tels que des verres basaltiques, des laitiers de hauts fourneaux ou autres, en vue de la production industrielle de laine de roche.

Il est connu de conduire le matériau à fibrer, à l'état fondu, à la périphérie de trois ou quatre roues de centrifugation, disposées à proximité l'une se l'autre, le matériau étant déversé sur une première roue qui l'accélère et renvoyé sur la roue suivante. Chaque roue transforme une partie du matériau fondu en renvoie l'excès sur la roue suivante.

Ces techniques de production de laine de roche à partir de matériaux à haut point de fusion sont plus généralement dénommées à centrifugation libre. Elles ont déjà fait l'objet de nombreux perfectionnements qui visent notamment à une amélioration du rendement en firbes. Il a été ainsi montré que le pourcentage de produits infibrés est réduit par une optimisation du couple diamètre-vitesse de rotation des roues. De même, l'état de surface des roues, suivant qu'il favorise ou non l'accrochage du matériau fondu influence l'étirage des fibres. D'autres propositions se réfèrent aux circulations de gaz autour des roues de centrifugation.

Le document de brevet français FR 84.16547 propose par ailleurs de contrôler les conditions dans lesquelles le matériau fondu est conduit de l'enceinte de fusion à la première roue de centrifugation. Pour celà, une réserve est interposé sur le trajet du matériau fondu, ce qui assure une homogénéisation de la température et de la composition de ce matériau. De plus l'établissement de cette réserve assure une régularisation du débit de matériau fondu provenant de l'enceinte de fusion.

En effet, le matériau est ordinairement fondu dans des fourneaux du type "cubilot" utilisé en fonderie. Les cubilots sont chargés à leur partie supérieure avec des couches successives alternées de combustible, généralement du coke et du matériau à fibrer. La zone de combustion se situe dans la zone inférieure de cubilot, au voisinage des tuyères par lesquelles est insufflé le gaz de combustion, généralement de l'air éventuellement enrichi d'oxygène. La température dégagée par la combustion entraîne la fusion du matériau à fibrer qui s'échappe par un trou de coulée situé à un niveau légèrement inférieur au niveau des tuyères. Enfin au dond du cubilot s'accumulent les résidus de fonte, provenant soit des nodules inclus dans le laitier, soit de la réduction d'oxydes de fer du reste de la charge. Quoique la fonte de plus grande densité se sépare naturellement du matériau à fibrer à l'état fondu, le trou de coulée doit être au niveau la plus élevé possible afin que ne s'échappent pas également de petites quantités de fonte qui entraîneraient une usure rapide des roues de centrifugation.

De telles enceintes de fusion sont très avantageuses, si son considère les débits très importants de produits fondus et le faible coût énergétique de cette fusion. Toutefois, ces cubilots fournissent un débit très irrégulier de matiére fondue, comme le souligne la demande de brevet françias FR 84.16547.

Les irrégularités de débit ont de multiples origines. En régime stationnaire, le niveau des charges de comburant et de combustible est en effet sensiblement constant, toutefois il se produit à intervalles réguliers des effondrements de charges, notamment de coke qui conduisent à un entraînement de morceaux de coke non brûlés avec le flux de matériau fondu. Ces particules de coke sont particulièrement dommageables à l'installation, car elles augmentent la quantité de produits infondus et surtout, les fibres produits simultanément à cet entraînement du coke doivent être éliminées sous peine de formation d'un produit inflammable.

D'autre part, comme indiqué précédemment, pour réduire les entraînements de fonte, le trou de coulée du matériau à fibrer doit être situé à un niveau relativement élevé, autrement dit à proximité de la zone de combustion et des tuyères d'insufflation du gaz comburant. Le trou de coulée du matériau à fibrer est alors situé dans une zone où régnent de grandes turbulences et des quantités importantes de gaz ou même de matières solides s'échappent en direction des roues de centrifugation.

La présente invention a pour but de proposer un procédé de fusion amélioré dans un enceinte de fusion de type cubilot permettant d'obtenir une coulée plus régulière de matériaux étirables tels des verres basaltiques, des laitiers de hauts fourneaux ou autres produits utilisés pour la production de fibres dites de roche.

Ce but est atteint selon l'invention par un procédé selon lequel on charge une enceinte de fusion du type cubilot munie d'un trou de coulée alternativement avec du coke et du matériau à fondre, en alimentant en gaz comburant au moyen d'une série de tuyères réparties sur toute la circonférence de l'enceinte de fusion, ayant des débits différents suivant leur éloignement du trou de coulée — et d'autant plus faibles que la tuyère est proche du trou de coulée — de façon à créer un gradient de vitesse de circulation des gaz, les vitesse de circulation les plus faibles se recontrant ainsi à proximité du trou de coulée et en plaçant une charge initiale de coke, avant que ne débute le chargement proprement dit, la partie inférieure de cette charge étant constituée de blocs de coke de grandes dimensions.

Selon l'invention et conformément à une première caractéristique de la revendication 1, le chargement du cubilot en gaz comburant est mené de façon non uniforme pour créer dans la section du cubilot correspondant au niveau du trou de coulée un gradient de vitesse de circulation des gaz, les vitesses de circulation les plus faibles se rencontrant à proximité du trou de coulée.

D'une manière surprenante, l'établissement d'un tel gradient de vitesse de circulation des gaz permet une augmentation de la quantité d'air insufflé dans le cubilot ce qui est favorable à la production de chaleur. Comme les gaz circulent à proximité du trou de coulée à une faible vitesse, leur tendance à s'échapper avec le matériau fondu est fortement réduite.

Ce gradient de vitesse de circulation des gaz est d'une manière préférée tel que la pression totale mesurée par rapport à la pression atmosphérique dans le seuil de coulée reste inférieure à 60% de la pression dans la première tuyère, c'est-à-dire dans la tuyère la plus proche de celui-ci.

De préférence, cette augmentation de la quantité d'air insufflé s'effectue sans accroissement du débit nominal à la section du cubilot au niveau des tuyères d'insufflation. Ceci cest obtenu à l'aide d'un cubilot constitué par une enceinte cylindrique à section constante. Quoiqu'un débit normal élevé rapporté à la section du cubilot an niveau des tuyères favorise thérori-quement la combustion du coke, il est en effet apparu selon l'invention que la tendance à l'envol des matèriaux en cours de fusion est alors très forte et compense cet avantage. De plus, avec une large section du cubilot au niveau des tuyères d'insufflation d'air, un gradient de vitesse de circulation de gaz s'établit plus aisément.

Pour établir celui-ci, on peut utiliser par exemple un cubilot pourvu d'une série de tuyères d'insufflation d'air réguliérement espacées sur toute la circonférence et alimenter ces tuyères avec des débits différents suivant leur éloignement du trou de coulée, par exemple avec des débits quasi nuls pour les tuyères placées de part et d'autre du trou de coulée.

Selon une autre caractéristique de la revendication 1, la coulée du matériau fondu est encore régularisée par une protection de l'entourage du trou de coulée. Le trou de coulée forme évidemment la limite supérieure du niveau des liquides, ou plus précisément la limite inférieure du niveau de libre circulation des gaz. Pour réduire le pourcentage de gaz dissous dans les liquides et éviter l'entraînement vers le trou de coulée de particules de coke non oxydées ou de matières premières encore à l'état solide, on propose selon l'invention de combler le fond du cubilot jusqu'au niveau du trou de coulée avec un charge de coke. Située sous la zone de combustion, dans une zone anaérobie, cette charge de coke ne contribue pas directement à la production de chaleur. Par contre, elle joue un rôle de filtre. De plus, elle soutient la première charge de matières premières et/ou de coke avent que ne s'établisse un régime stationnaire de fonctionnement.

Cette charge initiale de coke est composée par des blocs de coke de grandes dimensions, posés sur le fond du cubilot après que celui-ci ait été protégé par un pisé.

Le combinaison de la présence de ce filtre formé par des blocs de coke et de l'établissement d'un gradient de vitesse de circulation des gaz garantissant une faible vitesse de circulation dans la zone proche du trou de coulée assure un débit de matériau fondu très régulier et homogène en composition ce qui conduit à une amélioration du rendement de l'opération de fibrage.

Comme la fusion de la roche est relativement lente, il faut veiller à ce que les gaz comburants et les gaz de combustion puissant circuler très facilement dans la zone de fusion et surtout puissent s'échapper en direction de la cheminée. Pour celà la charge ne doit pas être trop compacte sous peine de la création d'une surpression dans la zone de fusion, surpression qui conduit à une augmentation des turbulences dans la zone de coulée. C'est pourquoi la charge de matières premières est de préférence introduite sous forme de blocs ou briquettes extrudés, par exemple cylindriques. Une telle méthode de préparation de la charge est bien connue, par exemple du brevet US 2 020 403. Elle présente de plus l'avantage de permettre une récupération des infondus, des déchets de fibres et un ajustement de la composition de matières premières.

L'invention a également pour objet un dispositif pour la mise en oeuore du procédé, dispositif défini de façon plus précise dans le revendications annexées.

D'autres avantages et caractéristiques de l'invention apparaissent dans la description qui suit d'un mode de réalisation de l'invention faite en référence à la planche unique annexée qui représente un schéma de fonctionnement d'un cubilot selon l'invention.

Une enceinte de fusion pour verres basaltiques, laitiers de hauts fourneaux métallurgiques ou autres produits à point de fusion élevés doit échauffer la charge de manière très rapide, pour un faible coût énergétique et sans nécessiter de fréquentes interruptions de production. Les procédés de fusion doivent tenir compte d'une part du faible prix d'achat des matières premières, il s'agit en effet d'une volorisation de produits de rejets de la sidérurgie per exemple, et d'autre part des rendements moyens en fibres capables d'être obtenus par les procédés de fibrage à centrifugation libre. Pour être exploitable industriellement, un procédé améliorant la capacité de fusion se doit donc d'être simple et facilement mis en oeuvre.

La quantité de chaleur nécessaire à l'élévation de la charge de roches ou de laitiers jusqu'à sa température de fusion est fournie par la combustion de coke, les charges de matières premières et de coke étant introduites en strates alternées ou éventuellement simultanément à partir de mélange de matières premières et de combustible. Il est bien connu que la combustion du coke s'effectue normalement dans la partie basse du cubilot, et plus exactement dans la section comprise entre les tuyères et 500 à 800 mm audessus. Cette combustion consomme l'oxygène de l'air tuyères suivant la réaction $C + O_2 \rightleftharpoons CO_2$, les gaz chauds libérés transfèrent leur chaleur à la charge située audessus, provoquant leur fusion.

Jusqu'à 900°C environ, une partie de carbone présent dans la charge est consommée dans une réaction endothermique avec le dioxyde de carbone produisant du monoxyde de carbone.

Si, partant de cette situation, on veut augmenter le débit de l'appareil, on doit augmenter la quantité d'air introduit, de façon à augmenter le débit de transformation du coke en dioxyde de carbone et en chaleur, et par conséquent le débit de matières passant de l'état solide à l'état liquide. Or nous avons constaté que, pour un cubilot donné, cette augmentation présentait une limite que nous attribuons à l'effet des turbulences en partie basse de l'appareil: dans certaines conditions de turbulences excessives, le coke brûle plus vite que la charge ne fond, au point le quantité de coke encore présente dans la zone de combustion est trop faible. L'oxygène n'étant plus consommé en partie basse, reste disponible pour réagir avec le coke situé dans les zones ou les strates supérieures, ce qui provoque une montée irréversible de la zone de combustion et l'arrêt de fonctionnement de l'appareil par blocage de la colonne de matières, depuis les parties basses.

Pour éviter cette configuration, on essaie en général d'augmenter la quantité de coke par charge, mais le résultat principal est la transformation de cet excès de coke en monoxyde de carbone, sans augmentation sensible du débit maximum.

Une meilleure solution consiste à chauffer l'air des tuyères à 400 à 600°C. On recule ainsi la limite de débit de l'appareil puisque, à composition égale, une quantité moindre de coke, donc d'air, est nécessaire pour obtenir la fusion.

D'autre part, comme le trou de coulée du matériau étirable doit être situé à un niveau assez élevé, pour une bonne décantation de la fonte occluse dans le matériau en fusion, il se trouve très proche de la zone de combustion et d'insufflation du gaz comburant. Une augmentation du débit gazeux correspond donc à une élévation des turbulences au niveau du trou de coulée et la coulée de matière en fusion est alors irrégulière et de plus des matières infondues, ou encore de la fonte, sont suceptibles d'êtres entraînées vers le roues de centrifugation et de provoquer leur usure rapide.

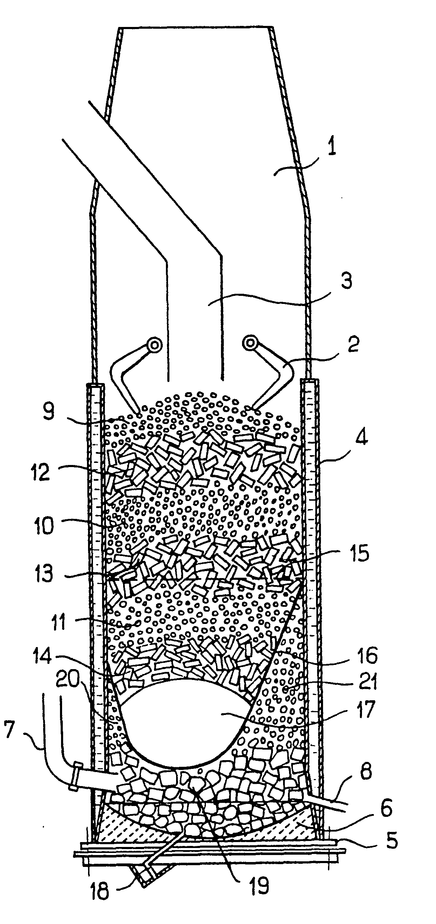

Pour y remédier et comme schématisé sur le planche unique annexée, l'invention propose de charger le cubilot en air de façon non uniforme pour créer au niveau des tuyères d'insufflage un gradient de vitesse de circulation des gaz, les vitesse de circulation les plus faibles se rencontrant à proximité de trou de coulée. De cette façon le cubilot peut fonctionner avec des débits et des vitesse moyennes de circulation des gaz, plus importants sans que soient accrues les turbulences dans la zone du trou de coulée. Le cubilot en fonctionnement ne possède donc qu'un plan de symètrie, le plan vertical coupant le trou de coulée utilisé sur la figure 1.

Sur cette figure, on a schématisé l'étagement des différentes zones d'un cubilot.

Le cubilot, surmonté par une cheminée 1 équipée de dispositifs d'épuration des gaz, ici non représentés, est équipé d'un dispositif de chargement 2 alimenté par une bande sans fin 3. Les parois latérales 4 du cubilot sont doublées pour un refroidissement à l'eau. Son fond 5 est de préférence démontable et fixé d'une manière étanche aux parois, par boulonnage. De plus, il est soigneusement protégé par un pisé 6. L'alimentation en gaz comburants s'effectue par des tuyères 7. De préférence, ces tuyères sont au nombre de douze es placées par paire régulièrement espacées à 60° les unes des autres. Le trou de coulée 8 est placé entre deux tuyères, légèrement en dessous d'elles. Le flux de matériau fondu qui s'en écoule est de préférence réceptionné par un creuset suivant l'enseignement de la demande FR. 84.16547. La matière est ensuite dirigée à l'aide d'une gouttière vers la première roue de centrifugation, dite roue de distribution en vue de la production de fibres.

Les produits fondus s'accumulent jusqu'au niveau de trou de coulée 8. Sous ce niveau, il faut éviter une trop grande quantité de gaz dissous, car ceux-ci entraînent des irrégularités de débit. Toutefois le trou de coulée 8 ne peut pas être situé sue le fond du cubilot si on utilise des matières premières dans la composition desquelles entrent des quantités importantes d'oxyde de fer, ce qui est notamment le cas avec les roches basaltiques. Outre qu'elle détériore la fibre, la fonte entraîne en effet une usure rapide des roues de centrifugation; il est donc nécessaire de permettre sa décantation au fond du cubilot et de l'évacuer périodiquement, par un piquage au travers du fond 5 et du pisé 6, le long de la goulotte 18. De cette façon, on maintient les niveaux des deux liquides, font et roche fondue, bien espacés.

Il doit être également souligné que, contrairement aux enceintes usuelles de fusion, le cubilot selon l'invention est de préférence à section cylindrique sensiblement constante, de sorte que l'on peut l'alimenter avec des débits de comburant très importants tout en ayant une vitesse de circulation rapportée à la section relativement plus faible qu'avec les cubilots à diamètre réduit en partie basse. Un tel cubilot à faible vitesse de circulation des gaz permet des débits de matière fondue très importants.

Les charges solides sont introduites par exemple sous forme de strates alternées de combustibles (9, 10, 11), et de matériau à fondre (12, 13, 14).

Convient plus particulièrement comme combustible de coke sous forme de morceaux d'assez large diamètres et de granulométrie supérieure à 150 mm. Le matériau à fondre est suivant le type de produits souhaités et les possibilités locales d'approvisionnement du laitier de hauts fourneaux, des roches basaltiques ou autres. Conformément à l'enseignement du brevet US 2 020 403, une partie de matériau à fondre est de préférence chargé à l'état de briquettes, per exemple cylindriques ou parallèlépipédiques et obtenus par extrusion du matériau humide. Les rejets de la production de fibres tels les infibrés, rejets des filtres d'eau de lavage, calcin sont ainsi agglomérés à l'aide d'une argile et recyclés. En pratique près de 15% de la charge de matériau fondu est constituée par des produits recyclés. Cette préparation de matériau fondu permet un ajustement de sa composition et notamment son enrichissement en alumine à l'aide d'argile ou de bauxite, ce qui permet d'améliorer la qualité des fibres. De plus avec des briquettes, le stockage et le chargement du matériau à fondre sont facilités.

Le principal avantage de l'utilisation de briquettes apparaît toutefois au moment de la fusion. En effet, lorsque les briquettes sont déversées dans le cubilot, elles se répartissent de façon aléatoire, avec un coefficient de remplissage faible, de l'ordre par exemple de 80% de l'espace disponible. Ceci permet pratiquement une libre circulation des gaz entre les briquettes et empêche que ne se créent des surpressions locales. Pour ces raisons, le coke est de préférence du type 60/100, qui assure également un coefficient de remplissage faible, à l'encontre de ce qui a été schématisé sur la figure pour différencier plus aisément les charges de coke et de matériau à fondre.

Les charges 9 à 14 sont renouvelées pendant toute la période de fonctionnement du four, soit pendant une durée de 2 à 3 mois. Pour la mise en route du four, elles sont soutenues par une charge initiale de coke qui occupe au moins toute la moitié inférieure de cubilot. La ligne pointillée 15 indique dans un cas d'espacé, la hauteur atteinte par la charge initiale de coke.

En fonctionnement stationnaire, cette charge initiale ne persiste qu'à l'extérieure d'un paraboloïde 16 de fusion, zones mortes dans lesquelles ne se produit pas de réaction chimique. Selon l'invention, et comme ici représenté, l'axe de révolution du paraboloïde 16 n'est pas confondu avec l'axe de symétrie du four, mais est décalé et très écarté du trou de coulée 8. Ceci est obtenu en réglant les tuyères 7 d'alimentation en air de telle manière que la pression totale mesurée par rapport à la pression atmosphérique du trou de coulée 8 soit toujours inférieure à 3000 Pa et de préférence à 2900 Pa, alors que la quantité d'air insufflé peut atteindre 6200N m³/h, soit une pression totale de 4900 Pa au niveau des tuyères 7. Il s'établit ainsi un gradient de vitesse de circulation des gaz très important avec une zone de turbulences 17 très éloignée du trou de coulée. Ceci conduit directement à une diminution très importante des irrégularités du débit de matériau fondu s'écoulant de trou de coulée. Ainsi pour un débit de 8 tonnes heure de roche en fusion, l'écart type de débit mesuré dans le cas alimentation en air symétrique est de 10%. Si par contre l'alimentation des tuyères est régulée conformément à l'invention, l'écart type n'est plus que de 6%. Ceci peut être obtenu de manière très simple en n'alimentant plus les quatre tuyères les plus proches du tour de coulée en conservant le même débit d'air insufflé. De préférence toutefois, l'alimentation des douze tuyères est maintenue, mais le débit insufflé par chaque tuyère est régulé en fonction de la position desdites tuyères par rapport au trou de coulée. Pour cela, chaque tuyère est alimentée par sa propre pompe. De cette façon, il est possible d'opérer un contrôle étroit de la position du paraboloïde 16 et de la modifier en cours de fonctionnement. De même, il est possible d'atteindre des tirées de plus de 10 tonnes heure avec des irrégularités de débit restant tolérables, c'est-à-dire inférieures à 10%.

De telles tirées ne sont envisageables que si une bonne évacuation des gaz combustibles est possible et donc avec des charges présentées sous forme de briquettes comme indiqué précédemment.

De plus, il est alors particulièrement avantageux d'utiliser la charge initiale de coke comme charge filtrante.

Comme selon l'invention la paraboloïde de fusion 16 est décentré, le trou de coulée 8 se situe dans une zone morte très importante dans laquelle le coke de la charge initiale n'est jamais oxydé. Cette charge initiale neut ainsi être constituée pour sa partie inférieure par des blocs 19 de coke de grandes dimensions, mauvais combustible, ce qui n'a ici aucune importance, mais pouvant être placés très soigneusement, de façon à présenter une porosité plus grande mais parfaitement répartie. Ces blocs 19 constituant ainsi une série de chicanes qui forcent la matière en fusion à s'homogénéiser, à décanter sa fonte, à n'entraîner jusqu'au seuil de coulée que des particules de coke trop petites pour obturer ce dernier, et facilement brûlées ensuite dans le creuset placé en aval. Le placement correct des blocs 19 est grandement facilité si, d'une manière préférée, on utilise un cubilot à fond amovible tel qui décrit précédemment. Ce placement peut alors être effectué à la main. Au-dessus du niveau d'arrivée des tuyères 7, la charge initiale doit être constituée par du coke identique au coke des strates 9, 10 et 11, même s'il se produit pas de réactions chimiques dans les zones 20 et 21 extérieures au paraboloïde 16 de fusion.

Ainsi le procédé selon l'invention améliore de façon sensible les tonnages de matériau fondu sans accroître pour autant le coût du traitement des charges de combustible et de matériau, ni celui de l'enceinte de fusion et ceci grâce à une simple distribution plus appropriée de l'ensemble des charges que ce soit les charges en combustible, en comburant et en matières premières. De plus, ce procédé peut éventuellement être mis en oeuvre à partir d'installations déjà construites ce qui constitue un avantage particulièrement intéressant.

**Revendications**

1. Procédé de fusion de matériaux à points de fusion élevés, tels des laitiers de hauts fourneaux ou des verres basaltiques, en vue de l'obtention d'un débit régulier et homogène de matière vitreuse destinée à la production de fibres, selon lequel on charge une enceinte de fusion du type cubilot munie d'un trou de coulée (8), alternativement avec du coke (9, 10, 11) et du matériau à fondre (12, 13, 14) en alimentant l'enceinte de fusion en gaz comburant au moyen d'une série de tuyères (7) réparties sur toute la circonférence de ladite enceinte de fusion, caractérisé en ce qu'on alimente les tuyères (7) selon des débits différents suivant leurs éloignement du trou de coulée (8) et d'autant plus faibles que la tuyère est proche du trou de coulée (8) de façon à créer dans le section du cubilot correspondant au niveau du trou de coulée (8) un gradient de vitesse de circulation des gaz, les vitesses de circulation les plus faibles se rencontrant à proximité de trou de coulée (8), et en ce qu'une charge initiale (15) de coke est placée avant que ne débute le chargement proprement dit, la partie inférieure de cette charge étant constituée de bloc de coke (19) de grandes dimensions.

2. Procédé selon la revendication 1, caractérisé en ce que la pression totale par rapport à la pression atmosphérique dans le seuil de coulée (8) est inférieure à 60% de la pression dans la tuyère (7) la plus proche du trou de coulée (8).

3. Procédé selon la revendication 2, caractérisé en ce que le gradient de vitesse de circulation des gaz est tel que la pression totale par rapport à la pression atmosphérique mesurée au trou de coulée (8) est inférieure à 3000 Pa et de préférence à 2900 Pa.

4. Procédé selon une des revendications précédentes, caractérisé en ce que les charges (12, 13, 14) de matériau à fondre sont introduites sous forme de briquettes parallélépipédiques ou cylindriques.

5. Procédé selon une des revendications précédentes, caractérisé en ce que les charges (9, 10, 11) de coke sont constituées par du coke du type 60/100.

6. Dispositif pour la mise en oeuvre du procédé selon une des revendications précédentes, caractérisé en ce qu'il comporte une enceinte de fusion cylindrique à doubles parois refroidies à l'eau munie d'un fond amovible (5) protégé par un pisé (6) et couvert par une charge de blocs de coke (19) de grandes dimensions, dotée dans sa partie supérieure d'un dispositif de chargement (2), ladite enceinte comportant un trou de coulée (8) et douze tuyères d'insufflage d'air (7), placées par paires espacées à 60° les unes des autres et munies chacune d'une pompe de regulation de débit.

## Patentansprüche

1. Verfahren zum Erschmelzen von Materialien mit hohen Schmelzpunkten, wie Hochofenschlakken oder Basaltgläsern, zum Erhalt eines regelmäßigen und homogenen Ausstoßes der glasartigen Masse, welche zur Faserherstellung bestimmt ist, nach welchem man einen Schmelzraum eines Kupolofen-Types, welcher mit einer Gießöffnung (8) versehen ist, abwechselnd mit Koks (9, 10, 11) und mit zu schmelzendem Material (12, 13, 14) beschickt, während der Schmelzraum mit einem die Verbrennung unterhaltenden Gas mittels einer Reihe von Düsen (7), die über den gesamten Umfang des besagten Schmelzraumes verteilt sind, versorgt wird, dadurch gekennzeichnet, daß man die Düsen (7) nach unterschiedlichen Ausstößen ihrem Abstand von der Gießöffnung (8) entsprechend und umso schwächer versorgt, wenn die Düse nahe an der Gießöffnung (8) liegt, um so in dem Abschnitt des Kupolofens, der der Höhe der Gießöffnung (8) entspricht, einen Geschwindigkeitsgradienten des Gasdurchflusses zu schaffen, wobei die schwächsten Durchflußgeschwindigkeiten sich in der Nachbarschaft der Gießöffnung (8) treffen, un daß eine anfängliche Beschickung (15) mit Koks angeordnet wird, bevor die eigentliche Beschickung begonnen wird, wobei der untere Teil dieser Beschickung aus Koksblöcken (19) mit großen Abmessungen gebildet wird.

2. Verfahren nach Anspruch 1, dadurch gekennzeichnet, daß der Gesamtdruck im Verhältnis zum Atmosphärendruck in der Gießschwelle (8) unterhalb von 60% des Druckes in der am nächten an der Gießöffnung (8) gelegenen Düse (7) liegt.

3. Verfahren nach Anspruch 2, dadurch gekennzeichnet, daß der Geschwindigkeitsgradient des Gasdurchflusses derart ist, daß der Gesamtdruck im Verhältnis zum Atmosphärendruck, der an der Gießöffnung (8) gemessen wird, unterhalb von 3000 Pa und vorzugsweise von 2900 Pa liegt.

4. Verfahren nach einem der vorhergehenden Ansprüche, dadurch gekennzeichnet, daß die Chargen (12, 13, 14) von zu schmelzendem Material in form von parallelepipedförmigen oder zylindrischen Briketts eingeführt werden.

5. Verfahren nach einem der vorhergehenden Ansprüche, dadurch gekennzeichnet, daß die Kokschargen (9, 10, 11) aus Koks vom Typ 60/100 gebildet werden.

6. Vorrichtung zur Durchführung des Verfahrens nach einem der vorhergehenden Ansprüche, dadurch gekennzeichnet, daß sie einen zylindrischen Schmelzraum umfaßt, der doppelte wassergekühlte Seitenwände und einen herausnehmbaren Boden (5) aufweist, der durch einen Pisébau (6) geschützt und durch eine Charge von Koksblöcken (19) mit großen Abmessung abgedeckt ist, wobei der Schmelzraum in seinem oberen Teil mit einer Beschikkungsvorrichtung (2) ausgestattet ist und eine Gießöffnung (8) sowie zwölf Lufteinblasdüsen umfaßt, die paarweise in Anstand von 60° voneinander angeordnet sind und jeweils mit einer Ausstoßregelpumpe versehen sind.

## Claims

1. Process for melting materials with high melting points, such as slag in blast furnaces or basaltic glass, in order to obtain a regular and homogeneous flow of vitreous material intended for the production of fibres, according to which a melting chamber of the cupola furnace type provided with a filling port (8) is charged alternately with coke (9, 10, 11) and the material to be melted (12, 13, 14), the melting chamber being supplied with oxidant gas by means of a series of pipes (7) distributed over the entire periphery of the said melting chamber, characterised in that the pipes (7) are supplied at different flow rates depending on their distance from the filling port (8) and being the slower, the nearer the pipe is to the filling port (8) in order to create a gas circulation velocity gradient in the cross-section of the corresponding cupola at the filling port (8), the lowest circulating velocities coinciding in the vicinity of the filling port (8); and in that an initial charge (15) of coke is introduced before the actual charging begins, the lower section of this charge consisting of large blocks of coke (19).

2. Process according to Claim 1, characterised in the total pressure in relation to atmospheric pressure in the filling port (8) is less than 60% of the pressure in the pipe (7) nearest the filling port (8).

3. Process according to Claim 2, characterised in that the gas circulation velocity gradient is such that the total pressure in relation to atmospheric pressure measured at the filling port (8) is less than 3000 Pa and preferably 2900 Pa.

4. Process according to one of the preceding Claims, characterised in that the charges (12, 13, 14) of material to be melted are introduced in the form of parallellepid or cylindrical briquettes.

5. Process according to one of the preceding Claims, characterised in that the charges (9, 10, 11) of coke consist of coke of the 60/100 type.

6. Device for implementing the process to one of the preceding Claims, characterised in that it comprises a cylindrical melting chamber with double water-cooled walls and provided with a removable base (5), protected by a lining (6) and covered by a charge of large coke blocks (19), provided on its upper part with a loading device (2), the said chamber comprising a filling port (8) and 12 air injecting pipes (7) located in pairs at spaces of 60° from one another and each provided with a flow regulating pump.